Europäisches Patentamt

European Patent Office

Office européen des brevets

(19)

(11) Numéro de publication : **0 189 718**
**B1**

(12) FASCICULE DE BREVET EUROPÉEN

(45) Date de publication du fascicule du brevet :
28.09.88

(51) Int. Cl.⁴ : **G 21 C 19/10,** G 21 C 7/12

(21) Numéro de dépôt : **85402648.1**

(22) Date de dépôt : **27.12.85**

(54) Dispositif et procédé d'accrochage pour tige de manoeuvre de grappe de commande dans un réacteur nucléaire.

(30) Priorité : **28.12.84 FR 8420030**

(43) Date de publication de la demande :
**06.08.86 Bulletin 86/32**

(45) Mention de la délivrance du brevet :
**28.09.88 Bulletin 88/39**

(84) Etats contractants désignés :
**AT BE CH DE GB IT LI SE**

(56) Documents cités :
**EP-A- 0 111 435**
**FR-A- 2 075 928**
**FR-A- 2 547 674**
**US-A- 3 212 980**
**US-A- 3 480 807**

(73) Titulaire : **FRAMATOME**
**Tour Fiat 1 place de la Coupole**
**F-92400 Courbevoie (FR)**

(72) Inventeur : **Savary, Fernand**
**14, rue Prince de Condé**
**F-95200 Saint Leu La Forêt (FR)**

(74) Mandataire : **Fort, Jacques et al**
**CABINET PLASSERAUD 84, rue d'Amsterdam**
**F-75009 Paris (FR)**

## Description

L'invention a pour objet un dispositif d'accrochage permettant de fixer, avec la sécurité requise, les tiges de manœuvre des grappes de commande dans les équipements internes supérieurs d'un réacteur nucléaire, ainsi qu'un procédé de mise en œuvre de ce dispositif.

Les réacteurs refroidis et modérés par de l'eau légère, et notamment les réacteurs à eau sous pression dits « REP », comportent en général des grappes de crayons contenant un matériau absorbant les neutrons, destinées à commander le fonctionnement du réacteur. Chaque grappe est prolongée vers le haut par une tige de manœuvre susceptible d'être actionnée par un mécanisme moteur d'introduction de la grappe dans le cœur et d'extraction. Ce mécanisme moteur est placé au-dessus du couvercle de la cuve de résistance à la pression et il est associé à un fourreau de traversée du couvercle contenant la tige de commande, reliée à la grappe par un accouplement désarmable.

La cuve contient une structure fixe de support et de maintien du cœur et de guidage des grappes et de leur tige de manœuvre. Cette dernière fonction est assurée par un ensemble appartenant à la structure, placé au-dessus du cœur, habituellement dénommé « équipements internes supérieurs » et comportant un tube guide par grappe, placé face à un des fourreaux de traversée.

Il est nécessaire de remplacer périodiquement certains des assemblages de combustible ou de changer leur disposition. Pour cela les équipements internes supérieurs doivent être enlevés. Auparavant, les grappes sont abaissées dans le cœur, à l'aide de leur tige de manœuvre. Le couvercle est enlevé et donne accès aux équipements internes supérieurs. Chaque tige de manœuvre est séparée de la grappe correspondante à l'aide d'un outil introduit axialement. Les équipements internes supérieurs sont soulevés, en entraînant les tiges de manœuvre.

Jusqu'ici, les tiges de manœuvre étaient retenues dans les équipements internes supérieurs, au cours de l'enlèvement de ces derniers, par appui sur des butées prévues en bas des équipements internes supérieurs. Cette solution présente un inconvénient grave sur les réacteurs pour lesquels les incertitudes d'alignement des grappes par rapport aux tiges de commande dépassent celles rencontrées sur les réacteurs REP actuellement en service. Lorsqu'ultérieurement on remet en place les équipements internes supérieurs, les défauts d'alignement éventuels des grappes de commande par rapport aux guides de grappes dans les internes risquent de provoquer un arc-boutement des tiges de manœuvre sur les pommeaux de préhension qui terminent les grappes.

L'invention vise notamment à fournir un dispositif d'accrochage répondant mieux que ceux antérieurement connus aux exigences de la pratique, notamment en ce qu'il garantit l'accrochage sûr des tiges de manœuvre des grappes à la partie haute des équipements internes supérieurs, lorsqu'on enlève le couvercle du réacteur, dont la température est redescendue de la valeur de fonctionnement (environ 320 °C en général) à une valeur inférieure à la température d'ébullition de l'eau, et généralement inférieure à 90 °C.

Dans ce but, l'invention propose notamment un dispositif d'accrochage pour tige de manœuvre d'une grappe de commande qui comporte, pour chaque tige de manœuvre : une embase fixée à la partie haute des équipements internes supérieurs et coaxiale à un tube de guidage ; plusieurs cliquets répartis autour de l'axe de l'embase et montés de façon à pouvoir basculer autour d'un axe horizontal vers une position d'engagement avec une portion, munie de gorges ou de cannelures circonférentielles, de la tige contenue dans le tube et à partir de cette position ; un coulisseau mobile axialement sur l'embase vers une position haute où il provoque l'engagement des cliquets dans une gorge de la tige et à partir de cette position ; et des moyens élastiques prenant appui sur l'embase et tendant à engager les cliquets de la tige, le coulisseau étant dimensionné de façon à être maintenu par le fourreau correspondant à un emplacement suffisamment éloigné de sa position haute pour que les cliquets soient dégagés, quelle que soit la température qui règne dans le réacteur, et en conséquence les variations de position relative du fourreau et des équipements internes supérieurs dues aux dilatations thermiques différentielles.

Le dispositif comporte avantageusement trois ressorts comprimés entre l'embase et le coulisseau, répartis autour de l'axe et placés entre des cliquets. Ces derniers peuvent avoir une forme de levier coudé, présentant un bras muni d'une lèvre ou dent de verrouillage et un autre bras terminé par une rotule emprisonnée dans le coulisseau.

L'invention propose également un procédé d'accrochage de tige de manœuvre dans une position prédéterminée, suivant lequel, une fois les cliquets des dispositifs engagés sur les tiges par suite de l'enlèvement du couvercle, on descend, sur chaque tige de manœuvre à son tour, un outil de verrouillage de cette tige dans une position déterminée pour laquelle la tige est entièrement masquée à l'intérieur des équipements internes, on enfonce le coulisseau à l'aide de l'outil pour dégager les cliquets en même temps qu'on saisit la tige de manœuvre, on remonte la tige jusqu'au niveau de verrouillage approprié, et on libère le coulisseau pour permettre au cliquet de s'engager de nouveau avant de relâcher la tige.

L'invention sera mieux comprise à la lecture de la description qui suit d'un mode particulier d'exécution, donné à titre d'exemple non limitatif. La description se réfère aux dessins qui l'accompagnent, dans lesquels :

— la Figure 1 est un schéma de principe montrant une fraction des internes supérieurs d'un réacteur en élévation et montrant, en coupe, une fraction de la cuve qui contient les internes et du couvercle ;

— la Figure 2 est une vue d'un dispositif d'accrochage, en coupe suivant un plan vertical passant par l'axe d'une tige de manœuvre, les pièces étant représentées dans la position qu'elles occupent lorsque le couvercle est en place ;

— la Figure 3, similaire à une fraction de la Figure 2, montre, en coupe suivant le plan III-III de la Figure 4, le dispositif alors que le couvercle est enlevé ;

— la Figure 4 est une vue en coupe suivant la ligne IV-IV de la Figure 3 ;

— la Figure 5 est un schéma de principe d'un outil de verrouillage de la tige dans les internes supérieurs.

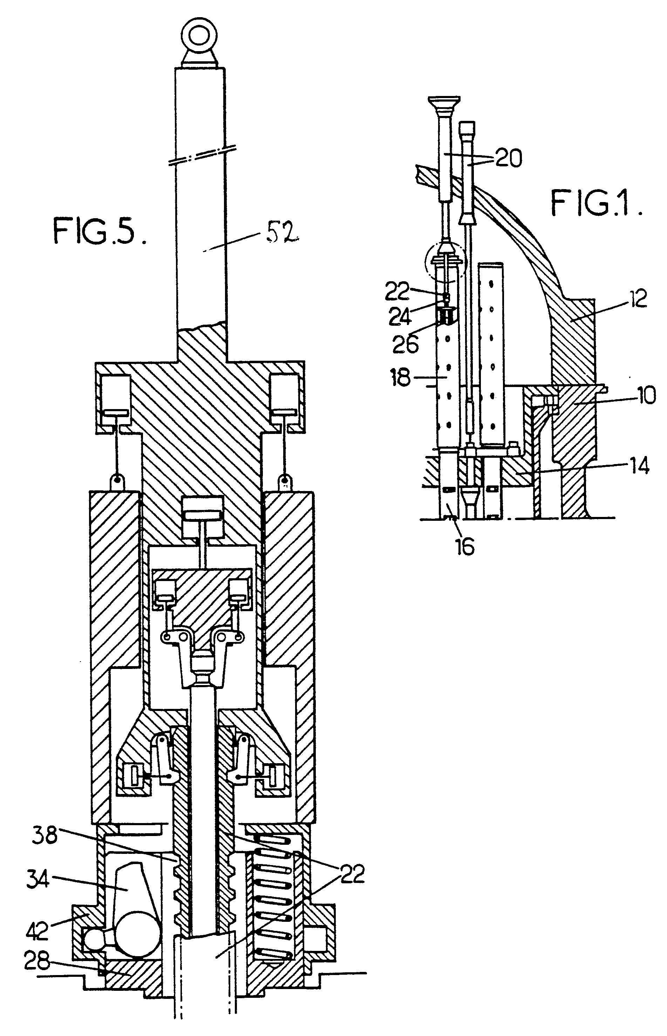

Le réacteur à eau sous pression dont une fraction est montrée en Figure 1 comporte une cuve 10 munie d'un couvercle 12. Les équipements internes supérieurs placés dans la cuve 10 comportent, fixés à une plaque 14, des tubes guides 16 s'étendant jusqu'à la plaque supérieure de cœur (non représentée) et des tubes de guidage 18 placés au-dessus de la plaque 14 et se terminant tous sensiblement au même niveau, au-dessous du couvercle. Le couvercle est traversé, face à chaque tube de guidage 18, par un fourreau 20 de guidage d'une tige de manœuvre 22. La Figure 1 montre très schématiquement un mode possible de connection entre cette tige 22 et le pommeau terminal 24 d'une grappe de commande 26 correspondante.

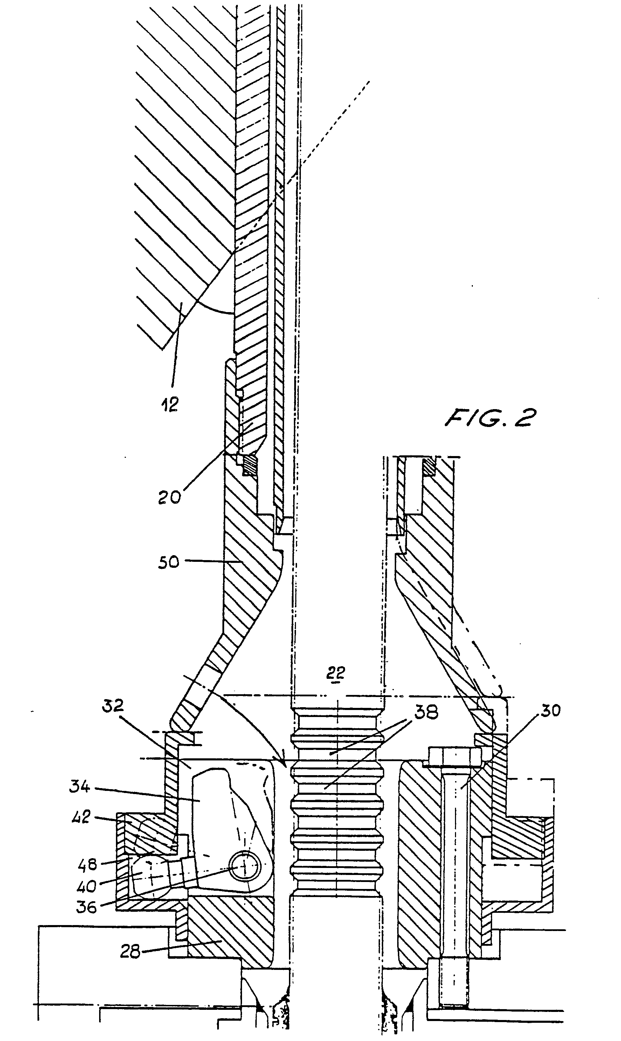

Chacun des tubes de guidage 18 est muni d'un dispositif d'accrochage (dans le cercle en tirets de la Figure 1) qui sera maintenant décrit en faisant référence aux Figures 2 à 4.

Le dispositif comporte une embase 28 fixée par des moyens quelconques, tels que des boulons 30, à la partie supérieure de chaque tube de guidage 18 dans lequel coulisse une tige de manœuvre 22. Dans l'embase sont pratiquées trois encoches 32 réparties à 120° l'une de l'autre. Chaque encoche est traversée par un axe 36 autour duquel un cliquet 34 peut basculer dans un plan passant par l'axe du tube de guidage 18. Chaque cliquet est en forme de levier coudé. L'un des bras du levier comporte une lèvre de verrouillage capable de venir en prise sur l'une des cannelures ou gorges 38 ménagées sur la tige 22. L'autre bras se termine par une rotule 40.

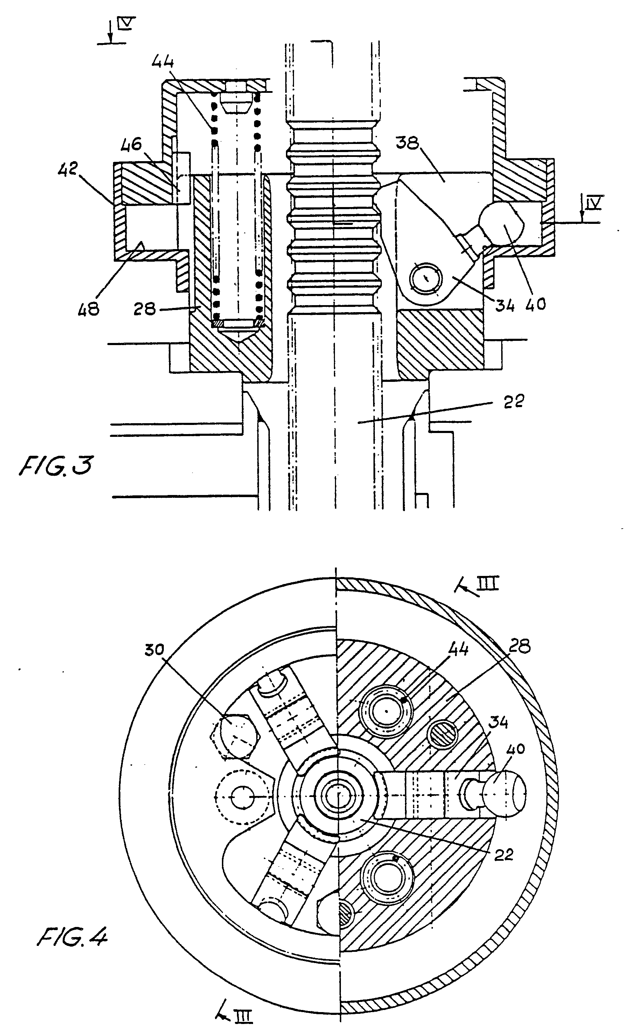

Un coulisseau 42, en plusieurs pièces assemblées, est monté sur l'embase 28 de façon à pouvoir se déplacer verticalement. Comme le montre la Figure 3, il est claveté coulissant en 46 sur l'embase. Les rotules 40 sont emprisonnées dans un logement annulaire 48 ménagé par le coulisseau. Trois ressorts 44 comprimés entre l'embase et le coulisseau tendent à repousser ce dernier vers une position haute pour laquelle la lèvre de chaque cliquet 34 s'engage dans une gorge 38 de la tige 22.

La Figure 2 montre également le fourreau 20 associé au tube de guidage 18 et l'embout 50 en forme de tulipe qui le termine et joue également le rôle de manchon de protection thermique. Un trou calibré dans la tulipe admet un débit déterminé dans l'intervalle tige de commande-tube guide. Ce calibrage de débit est important lorsque le nombre de grappes est élevé car la somme de ces débits court-circuite le cœur et risque d'affecter le bilan thermique global. Lors du fonctionnement du réacteur, le fourreau et son embout baignent, ainsi que l'ensemble des équipements internes supérieurs, dans le réfrigérant à température et pression élevées, également en contact avec la cuve. L'embout 50 est monté à un emplacement tel que, quelles que soient les dilatations thermiques différentielles, l'embout enfonce le coulisseau 42 dans une position où il retient les cliquets 34 hors de contact avec la tige 22. La Figure 2 montre en traits pleins l'une des positions extrêmes que peuvent prendre les cliquets 34 lorsque le couvercle est en place. Elle montre, en traits mixtes, l'autre position extrême que peuvent prendre les cliquets 34 et le coulisseau 42. On voit que dans ce dernier cas subsiste encore une garde angulaire de 20° environ, dans le cas où les dilatations différentielles sont les plus défavorables. Lorsque le coulisseau est totalement libre au contraire, les ressorts 44 assurent la venue des cliquets 34 en prise dans une gorge 38.

La mise en œuvre du dispositif qui vient d'être décrit peut notamment être la suivante, lorsqu'est entreprise une campagne de rechargement en combustible.

Le réacteur est tout d'abord arrêté. La température du réfrigérant diminue progressivement. Lorsqu'elle est descendue à une valeur inférieure à 90 °C, généralement d'environ 70 °C, on procède à l'enlèvement du couvercle. Les grappes de commande sont alors en position basse dans le réacteur. Lorsque le couvercle est soulevé, les embouts 50 libèrent les coulisseaux 42. Ces derniers remontent sous l'action des ressorts de rappel 44 et accostent les cliquets 34 sur les tiges de manœuvre 22.

Chaque tige de manœuvre à son tour est ensuite séparée de la grappe correspondante. Dans le cas fréquent où la tige de manœuvre est munie d'un grappin à doigts flexibles enserrant un pommeau de commande de la grappe (c'est-à-dire dans le cas d'une disposition du genre décrit par exemple dans le document EP-A-111 435), la séparation peut être effectuée à l'aide d'un outil inséré axialement sur la tige de commande.

Après séparation de la grappe, chaque tige de commande est verrouillée dans les équipements internes supérieurs dans une position déterminée, telle que le bas de la tige de manœuvre soit masqué à l'intérieur des équipements internes et ne risque pas de venir s'arc-bouter ultérieurement sur les pommeaux, lors de la remise en place des internes. Ce verrouillage est effectué à l'aide d'un outil tubulaire 52 (Figure 5) dont la base est prévue pour enfoncer le coulisseau 42 de façon à écarter les cliquets 34 et à libérer la tige 22.

L'arbre de manœuvre de l'outil 52 permet de relever la tige de manœuvre jusqu'au niveau de verrouillage prévu, le coulisseau 42 restant enfoncé. Enfin, on libère le coulisseau 42 en relevant la base de l'outil, l'arbre restant immobile. Les ressorts de rappel 44 ramènent alors le coulisseau en position haute et engagent les cliquets 34 dans une gorge 38 de la tige de manœuvre 22. L'outil peut alors être retiré.

L'outil peut comporter une échelle graduée permettant de vérifier le niveau donné à la tige de manœuvre.

Une fois toutes les tiges amenées à la position de verrouillage choisie, les internes supérieurs sont enlevés en bloc et le rechargement peut être entrepris. Une fois celui-ci effectué, les internes supérieurs sont remis en place. Puis les tiges de commande sont ramenées en prise sur les pommeaux des grappes, l'outil permettant d'effectuer cette manœuvre étant également conçu pour déverrouiller le dispositif d'accrochage en appuyant sur le coulisseau.

On voit que le dispositif suivant l'invention permet de maintenir à coup sûr en place les tiges de manœuvre, qu'elles soient ou non munies de leur grappe, à un niveau tel que les opérations de manutention et d'accostage lors de la remise en place des internes supérieurs soient facilitées. Les temps requis pour les déconnexions, reconnexions et surtout les vérifications associées sont réduits alors que la sûreté est supérieure à celle du dispositif selon l'art antérieur.        .

**Revendications**

1. Dispositif d'accrochage pour tige de manœuvre (22) d'une grappe de commande dans un réacteur nucléaire comprenant une cuve (10) munie d'un couvercle (12) auquel sont fixés des fourreaux (20) de traversée destinés aux tiges et contenant une structure interne fixe comportant des tubes (18) de guidage des tiges, dispositif caractérisé en ce qu'il comporte, pour chaque tige : une embase (28) fixée à la partie haute de la structure interne et coaxiale à un tube de guidage ; plusieurs cliquets (34) répartis autour de l'axe de l'embase et montés de façon à pouvoir basculer autour d'un axe horizontal (36) vers une position d'engagement avec une portion, munie de gorges ou de cannelures circonférentielles, de la tige (22) contenue dans le tube et à partir de cette position ; un coulisseau (42) mobile axialement sur l'embase vers une position haute où il provoque l'engagement des cliquets dans une gorge de la tige et à partir de cette position ; et des moyens élastiques (44) prenant appui sur l'embase et tendant à engager les cliquets sur la tige, le coulisseau étant dimensionné de façon à être maintenu par le fourreau correspondant à un emplacement suffisamment éloigné de la position haute pour que les cliquets soient dégagés, quelle que soit la température qui règne dans le réacteur.

2. Dispositif selon la revendication 1, caractérisé en ce que les moyens élastiques comprennent trois ressorts de rappel (44) comprimés entre l'embase (28) et le coulisseau (42).

3. Dispositif selon la revendication 2, caractérisé en ce qu'il comporte trois cliquets (34) alternés avec les ressorts autour de l'axe.

4. Dispositif selon la revendication 3, caractérisé en ce que les cliquets (34) présentent une forme de levier coudé, ayant un bras de verrouillage terminé par une lèvre destinée à venir en prise dans une gorge de la tige et un bras terminé par une rotule emprisonnée dans un logement annulaire (48) du coulisseau.

5. Dispositif selon l'une quelconque des revendications précédentes, caractérisé en ce que chaque fourreau de traversée (20) est muni d'un embout terminal (50) en forme de tulipe destiné à prendre appui sur le coulisseau et à constituer élément de protection thermique.

6. Procédé d'accrochage de tige de manœuvre de grappe de commande dans une position déterminée dans les internes supérieurs d'un réacteur, caractérisé en ce que, une fois les cliquets d'un dispositif suivant l'une quelconque des revendications 1 à 5 engagés sur les tiges par suite de l'enlèvement du couvercle, on descend, sur chaque tige de manœuvre à son tour, un outil de verrouillage (52) de cette tige dans une position déterminée pour laquelle la tige est entièrement masquée à l'intérieur des équipements internes, on enfonce le coulisseau (42) à l'aide de l'outil pour dégager les cliquets (34) en même temps qu'on saisit la tige de manœuvre, on remonte la tige jusqu'au niveau de verrouillage approprié, et on libère le coulisseau pour permettre aux cliquets de s'engager de nouveau avant de lâcher la tige.                  ,

**Claims**

1. Device for retaining a drive shaft (22) of a control cluster in a nuclear reactor having a vessel (10) provided with a cover (12) secured to penetration sleeves (20) for the shafts and containing stationary internals comprising shaft guiding tubes (18), characterized in that it comprises, for each shaft : a base member (28) fixed to the upper portion of the internals and coaxial to a guiding tube ; a plurality of grippers (34) distributed about the axis of the base member and mounted for pivotal movement about a horizontal axis (36) toward a position of engagement with a fraction, formed with circumferential grooves or splines, of the shaft (22) accommodated in the tube and from that position ; a slide member (42) axially movable with respect to the base member to a higher position where it engages the grippers into a groove of a shaft and from that position ; and resilient means (44) bearing on the base member and biasing the grippers into engagement with the shaft, the slide member being dimensioned for being held by the respective sleeve at a position sufficiently remote from the higher position for maintaining the grippers out of engagement whatever the temperature prevail-

ing in the reactor.

2. Device according to claim 1, characterized in that the resilient means comprise three return springs (44) compressed between the base member (28) and the slide member (42).

3. Device according to claim 2, characterized in that it comprises three grippers (34) alternating with the springs about the axis.

4. Device according to claim 3, characterized in that the grippers (34) are in the form of bell crank levers, having a latching arm with an end lip arranged for engagement into a groove of the shaft and an arm having an end ball retained in an annular chamber (48) of the slide member.

5. Device according to any one of the preceding claims, characterized in that each penetration sleeve (20) is provided with a tulip shaped end piece (50) arranged for abutting the slide member and for constituting a thermal protection element.

6. Method for locking a control cluster drive shaft in a predetermined position in the upper internals of a reactor, characterized in that, after the grippers of a device according to any one of claims 1-5 have been engaged on the shafts due to removal of the cover, a tool (52) for locking that shaft in a predetermined position, for which the shaft is entirely within the internals, is lowered on each drive shaft in turn ; the slide member (42) is forced down with the tool for releasing the grippers (34) at the same time as the drive shaft is seized ; the drive shaft is raised until the appropriate locking level ; and the slide member is released for allowing the grippers to become operative again before the shaft is released.

**Patentansprüche**

1. Aufhängevorrichtung für eine Betätigungsstange (22) eines Kontrollbündels in einem Kernreaktor, der ein Gefäß (10) aufweist, das mit einem Deckel (12) versehen ist, an welchem für den Durchtritt der Stangen bestimmte Hülsen (20) befestigt sind, und das einen fixen Innenaufbau enthält, welcher Führungsrohre (18) für die Stangen aufweist, wobei die Vorrichtung dadurch gekennzeichnet ist, daß sie für jede Stange aufweist : einen Sockel (28), der am oberen Teil des Innenaufbaus und koaxial zu einem Führungsrohr befestigt ist ; mehrere Klinken (34), die um die Achse des Sockels verteilt und derart montiert sind, daß sie um eine horizontale Achse (36) in eine Eingriffsstellung mit einem mit Umfangsnuten oder Umfangsauskehlungen versehenen Abschnitt der Stange (22) und aus dieser Stellung heraus schwenkbar sind ; einen Schieber (42), der auf dem Sockel in axialer Richtung in eine angehobene Stellung, in welcher er den Eingriff der Klinken in eine Nut der Stange bewirkt, und aus dieser Stellung bewegbar ist ; und elastische Mittel (44), die am Sockel angreifen und bestrebt sind, die Klinken mit der Stange in Eingriff zu halten, wobei der Schieber so dimensioniert ist, daß er durch die zugeordnete Hülse in einer von der angehobenen Stellung ausreichend entfernten Lage gehalten wird, damit die Klinken bei jeder im Reaktor herrschenden Temperatur außer Eingriff sind.

2. Vorrichtung nach Anspruch 1, dadurch gekennzeichnet, daß die elastischen Mittel drei Vorspannfedern (44) aufweisen, die zwischen dem Sockel (28) und dem Schieber (42) zusammengedrückt sind.

3. Vorrichtung nach Anspruch 2, dadurch gekennzeichnet, daß sie drei Klinken (34) aufweist, die sich um die Achse herum mit den Federn abwechseln.

4. Vorrichtung nach Anspruch 3, dadurch gekennzeichnet, daß die Klinken (34) die Form eines Winkelhebels haben, von dem ein Verriegelungsarm in einer Lippe endet, die zum Eingriff mit einer Nut der Stange bestimmt ist, und ein Arm in einem Kugelkopf endet, welcher in einer ringförmigen Ausnehmung (48) des Schiebers angeordnet ist.

5. Vorrichtung nach einem der vorhergehenden Ansprüche, dadurch gekennzeichnet, daß jede Durchtrittshülse (20) mit einem Endansatz (50) in Form einer Tulpe versehen ist, der am Schieber angreift und ein Wärmeschutzelement bildet.

6. Verfahren zum Aufhängen der Betätigungsstange eines Kontrollbündels in einer vorbestimmten Lage an den oberen Innenaufbauten eines Reaktors, dadurch gekennzeichnet, daß nach dem Eingriff der Klinken einer Vorrichtung nach einem der Ansprüche 1 bis 5 in die Stangen infolge Anhebens des Deckels auf jede Betätigungsstange ihrerseits ein Werkzeug (52) zum Verriegeln dieser Stange in einer vorbestimmten Stellung abgesenkt wird, in welcher diese Stange zur Gänze im Inneren der Innenaufbauten verdeckt ist, worauf der Schieber (42) mit Hilfe des Werkzeuges niedergedrückt wird, um die Klinken (34) aus dem Eingriff zu lösen, wobei gleichzeitig die Betätigungsstange erfaßt wird, worauf die Stange bis auf das geeignete Verriegelungsniveau angehoben und der Schieber freigegeben wird, damit die Klinke vor dem Loslassen der Stange erneut in Eingriff kommt.

FIG.5.

FIG.1.

FIG. 2

FIG.3

FIG.4

3